# FASCICULE DE BREVET EUROPEEN

(11) **EP 3 586 423 B1**
(45) Date de publication et mention de la délivrance du brevet: **22.10.2025**
(21) Numéro de dépôt: 18707083.4
(22) Date de dépôt: 05.02.2018
(51) Int. Cl.: B60L 58/21, H01M 10/42, H02J 7/00

(54) **BATTERIE À GROUPES DE CELLULE(S) DE STOCKAGE ASSOCIÉS RESPECTIVEMENT À DES MODULES DE CONVERSION, POUR LA FOURNITURE DE TENSIONS DE TYPES DIFFÉRENTS**
BATTERIE MIT GRUPPEN VON JEWEILS MIT KONVERSIONSMODULEN VERBUNDENEN SPEICHERZELLEN ZUR SPANNUNGSVERSORGUNG VERSCHIEDENER ARTEN
BATTERY WITH GROUPS OF STORAGE CELLS RESPECTIVELY ASSOCIATED WITH CONVERSION MODULES, FOR SUPPLYING VOLTAGES OF DIFFERENT TYPES

(30) Priorité: 22.02.2017 FR 1751387
(43) Date de publication de la demande: 01.01.2020
(73) Titulaire: Stellantis Auto SAS, 78300 Poissy (FR); Centre National de la Recherche Scientifique, 75794 Paris Cedex 16 (FR); Ecole Normale Supérieure Paris-Saclay, 91190 Gif-sur-Yvette (FR)
(72) Inventeur: ROY, Francis, 91940 Les Ulis (FR); REVOL, Bertrand, 94260 Fresnes (FR)
(74) Mandataire: PSIP
(86) Numéro de dépôt international: PCT/FR2018/050277
(87) Numéro de publication internationale: WO 2018/154206

(56) Documents cités:
- WO-A1-2016/174117
- CN-U- 204 668 973
- JP-A- 2007 295 684
- US-A1- 2009 026 837
- US-A1- 2013 193 752
- US-A1- 2014 009 092
- US-A1- 2014 125 284
- US-A1- 2015 155 724
- US-A1- 2016 006 080
- US-A1- 2016 077 566
- US-A1- 2016 118 789
- US-A1- 2016 311 328
- MOO CHIN-SIEN ET AL: "Battery power system with arrayed battery power modules", 2013 INTERNATIONAL CONFERENCE ON SYSTEM SCIENCE AND ENGINEERING (ICSSE), IEEE, 4 July 2013 (2013-07-04), pages 437 - 441, XP032492471, ISSN: 2325-0909, ISBN: 978-1-4799-0007-7, [retrieved on 20130927], DOI: 10.1109/ICSSE.2013.6614705

## Description

L'invention concerne les batteries rechargeables qui comprennent plusieurs groupes de cellule(s) de stockage d'énergie électrique et qui sont destinées à équiper certains systèmes.

Certains systèmes, comme par exemple certains véhicules, de type tout électrique ou hybride et éventuellement de type automobile, comprennent, généralement dans leur soubassement, au moins une batterie rechargeable comportant un boîtier logeant des groupes de cellule(s) chargée(s) de stocker de l'énergie électrique. Ces cellules peuvent, par exemple, être de type Li-ion ou Ni-Mh ou plomb ou Lithium-Métal-Polymère (ou LMP) ou encore Sodium-ion.

Par exemple, dans un véhicule tout électrique ou hybride, ce type de batterie peut être chargé d'alimenter en tensions de types différents, sur des sorties différentes, des équipements (ou organes) électriques de types différents. Ainsi, une première sortie peut être dédiée à l'alimentation d'équipement(s) électrique(s) de puissance en basse tension continue (typiquement sous 450 V), une deuxième sortie peut être dédiée à l'alimentation d'équipement(s) électrique(s) en alternatif triphasé, et une troisième sortie peut être dédiée à l'alimentation d'équipements électriques d'un réseau de bord en très basse tension continue (typiquement sous 12 V).

Une telle batterie comprend généralement des moyens de gestion chargés d'assurer, via des cartes électroniques appropriées, une mesure de la tension sur les bornes de sortie, une mesure de la température de chaque groupe de cellule(s) et une mesure du courant interne. Ces moyens de gestion sont également chargés de contrôler les conditions et l'état de charge de chaque groupe de cellule(s) pour protéger la batterie en l'empêchant de fonctionner en dehors d'une plage de fonctionnement normal prédéfinie par des courants de charge et de décharge limites, des plages de températures limites et des niveaux de tension limites de fonctionnement des groupes de cellule(s).

On notera que ce type de batterie comprend généralement, également, des moyens permettant de la mettre hors circuit lors d'un accident ou d'une intervention de maintenance, une sortie pourvue d'un interrupteur avec un circuit de précharge, un interrupteur pour activer la recharge rapide, et des fusibles sur chaque entrée/sortie.

Par ailleurs, le fonctionnement de ce type de batterie est supervisé par des moyens de supervision internes, grâce à des algorithmes permettant notamment de calculer son état de charge (ou SOC (« State Of Charge »)), de déterminer son état de santé (ou SOH (« State Of Health »)), de gérer l'équilibrage des groupes de cellule(s), de communiquer avec un calculateur du véhicule, de limiter les appels de courant (courant de décharge ou de recharge), et d'assurer sa gestion thermique en régulant le débit d'un liquide caloporteur la traversant et/ou l'entourant partiellement.

Aujourd'hui, pour que les équipements électriques des différents types puissent être alimentés de façons appropriées, on est contraint d'installer en aval de la sortie de la batterie, différents organes de conversion d'énergie. Ainsi, on installe en aval de la sortie un premier convertisseur de type DC-DC (continu/continu), un éventuel chargeur, ainsi qu'un onduleur.

Ces organes de conversion d'énergie, externes à la batterie, sont assez volumineux et assez onéreux, et ne peuvent pas sécuriser la batterie lorsqu'elle fait l'objet d'un court-circuit interne qui se traduit instantanément par une libération d'énergie électrique très importante liée à la décharge de l'ensemble des cellules.

De plus, le premier convertisseur de type DC-DC induit des pertes d'énergie et les tensions triphasées produites par l'onduleur sont chargées d'harmoniques qui induisent des pertes fer supplémentaires dans une machine électrique (par exemple motrice). De son côté, l'onduleur est également une source de pollution électromagnétique pouvant dégrader le fonctionnement de la machine électrique.

En outre, on est contraint d'installer dans l'architecture électrique, en aval de la batterie, de nombreux filtres externes réalisés par des éléments inductifs et capacitifs afin d'obtenir un niveau de compatibilité électromagnétique acceptable pour tous les équipements électriques. Or, ces filtres externes s'avèrent particulièrement volumineux.

Il a certes été proposé dans le document brevet FR 2977986 d'équiper la batterie de moyens de commutation destinés à mettre en série et/ou en parallèle les cellules, afin de contrôler la tension délivrée aux bornes. Mais cette solution ne permet pas de générer en sortie de la batterie plusieurs (au moins deux) types de tension différents (alternatif, triphasé, continu). Par conséquent, on est toujours contraint d'utiliser certains organes de conversion d'énergie en aval de la batterie pour définir les différents types de tension nécessaires aux équipements électriques du système considéré.

En outre, l'état de la technique est connu dudocument US2016311328A1 et du document WO20161741117A1 correspondant au préambule de la revendication 1.

L'invention a notamment pour but d'améliorer la situation.

Elle propose notamment à cet effet une batterie comprenant des cellules de stockage d'énergie électrique et au moins deux sorties principales propres à délivrer des tensions de types différents et destinées à alimenter différents équipements électriques d'un système.

Cette batterie comprend également :
- des modules de conversion installés chacun en sortie d'un groupe d'au moins une cellule et comprenant chacun un premier convertisseur de type DC-DC et propre à convertir une première tension continue fournie par la sortie du groupe associé en une deuxième tension continue prédéfinie, chacun des modules de conversion comprenant :
   - un onduleur propre à convertir cette première tension continue en une troisième tension alternative prédéfinie, et des moyens d'interconnexion propres à connecter une sortie du premier convertisseur ou une sortie de l'onduleur à une sortie d'un autre groupe ou à l'une des sorties principales en fonction d'une instruction reçue,
   - des moyens de contrôle auxiliaires propres à générer des signaux de commande propres à placer ledit onduleur associé dans un état qui est fonction d'une instruction reçue,
   chaque onduleur étant agencé sous la forme d'un pont en H, chaque module de conversion comprenant des moyens de pilotage propres à placer son pont en H dans un état fonction d'un signal de commande généré par lesdits moyens de contrôle auxiliaires,
- des moyens de contrôle principaux propres à générer chaque instruction dédiée à chaque module de conversion en fonction d'une définition reçue du type de tension qui est requis pour alimenter au moins l'un des équipements électriques,
caractérisée en ce que chaque module de conversion comprend un second convertisseur de type DC-DC et propre à convertir ladite première tension continue en une quatrième tension continue prédéfinie destinée à alimenter lesdits moyens de pilotage associés.

Ainsi, il est désormais possible de produire en interne dans la batterie n'importe quel(s) type(s) de tension (ou courant) en fonction des besoins, sans qu'il faille prévoir en aval des sorties principales de cette batterie des organes de conversion d'énergie.

La batterie selon l'invention peut comporter d'autres caractéristiques qui peuvent être prises séparément ou en combinaison, et notamment :
- les moyens de contrôle auxiliaires associés à chaque groupe peuvent être propres à déterminer une tension aux bornes du groupe associé et une température au sein du groupe associé, et à estimer un état de charge en cours du groupe associé ;
- elle peut comprendre un bus multiplexé couplé aux moyens de contrôle principaux et à chacun des modules de conversion. Dans ce cas, chaque module de conversion peut comprendre un contrôleur couplé au bus multiplexé ;
- elle peut comprendre trois sorties principales propres à délivrer respectivement des tensions de trois types différents ;
- les types de tension peuvent être choisis parmi une très basse tension continue, une basse tension continue, et une tension alternative monophasée ou triphasée.

L'invention propose également un système comprenant des équipements électriques et au moins une batterie du type de celle présentée ci-avant et propre à alimenter ces équipements électriques. Un tel système peut, par exemple, constituer un véhicule de type tout électrique ou hybride, et éventuellement de type automobile.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule de type tout électrique et comprenant une batterie rechargeable selon l'invention,
- la figure 2 illustre schématiquement et fonctionnellement un exemple de réalisation d'une batterie rechargeable selon l'invention, et
- la figure 3 illustre schématiquement et fonctionnellement un exemple de réalisation d'un module de conversion associé à un groupe de cellule(s) et pouvant faire partie d'une batterie rechargeable selon l'invention.

L'invention a notamment pour but de proposer une batterie B1 comprenant des cellules de stockage propres à stocker de l'énergie électrique et au moins deux sorties principales SPk propres à délivrer des tensions de types différents afin d'alimenter différents équipements électriques d'un système V.

Dans ce qui suit, on considère à titre d'exemple non limitatif que la batterie B1 fait partie d'un véhicule automobile de type tout électrique, comme par exemple une voiture. Mais l'invention n'est pas limitée à ce type de système. Elle concerne en effet tout type de système comportant au moins une batterie rechargeable (comportant des groupes de cellule(s)), et notamment les véhicules, qu'ils soient terrestres, maritimes (ou fluviaux) ou aériens, les installations, éventuellement de type industriel, et les bâtiments. On notera d'ailleurs, que lorsque le système est un véhicule, son groupe motopropulseur (ou GMP) peut être de type tout électrique ou de type hybride (thermique/électrique).

Par ailleurs, on considère dans ce qui suit, à titre d'exemple non limitatif, que les cellules (de stockage) de la batterie (rechargeable) B1 sont de type Li-ion. Mais l'invention n'est pas limitée à ce type de cellule. Elle concerne en effet tout type de cellule capable de stocker de l'énergie électrique en vue de la restituer. Ainsi, les cellules pourront être également de type Ni-Mh, ou plomb, ou Sodium-ion, ou encore Lithium-Métal-Polymère (ou LMP), par exemple.

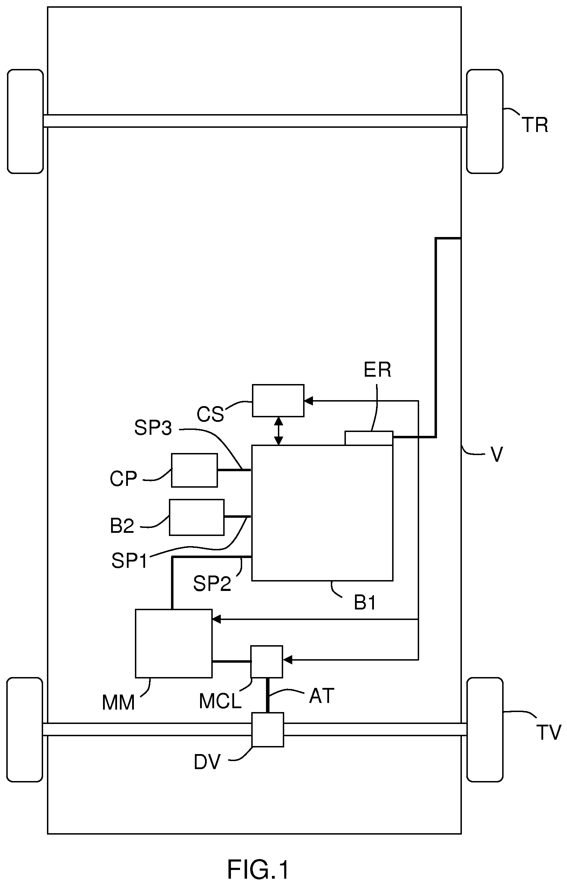

On a schématiquement représenté sur la figure 1 un système V, ici un véhicule automobile, comprenant une chaîne de transmission comportant un groupe motopropulseur (ou GMP) de type tout électrique, un calculateur de supervision CS propre à superviser (ou gérer) le fonctionnement du GMP, et un équipement électrique de puissance CP. On notera que le GMP pourrait également être de type hybride (thermique/électrique).

Le GMP comprend notamment un équipement électrique MM définissant une machine motrice, un moyen de couplage MCP, et au moins une batterie B1 selon l'invention.

La machine motrice MM est une machine ou un moteur électrique (et donc non thermique) destiné(e) à fournir du couple pour au moins un train TV du véhicule V via le moyen de couplage MCL. On notera que dans l'exemple de réalisation illustré non limitativement, la machine motrice MM fournit du couple pour le train avant TV via le moyen de couplage MCL. Mais dans une variante de réalisation elle pourrait fournir du couple au seul train arrière TR ou bien aux trains avant TV et arrière TR, via le second moyen de couplage MC2.

Cette machine motrice MM fournit, ici, son couple à un arbre de transmission AT qui est couplé au train avant TV, via le moyen de couplage MCL. Ici, compte tenu du type de véhicule décrit, les trains avant TV et arrière TR comprennent des roues.

Le fonctionnement de la machine motrice MM est piloté par le calculateur de supervision CS.

La batterie B1 est par exemple, ici, installée dans le soubassement du véhicule V.

Cette batterie B1 comprend un boîtier logeant, notamment, des groupes Gj (j = 1 à N) d'au moins une cellule de stockage d'énergie électrique et au moins deux sorties principales SPk propres à délivrer des tensions de types différents et destinées à alimenter différents équipements électriques MM, CP, B2 du système V (ici un véhicule automobile). La valeur de N, qui fixe le nombre de groupes Gj dépend des besoins du système V. Elle peut donc prendre n'importe quelle valeur supérieure ou égale à deux.

On notera que lorsqu'un groupe Gj comprend plusieurs cellules (de stockage d'énergie électrique), ces dernières peuvent être montées en série ou bien en parallèle au sein de leur groupe Gj.

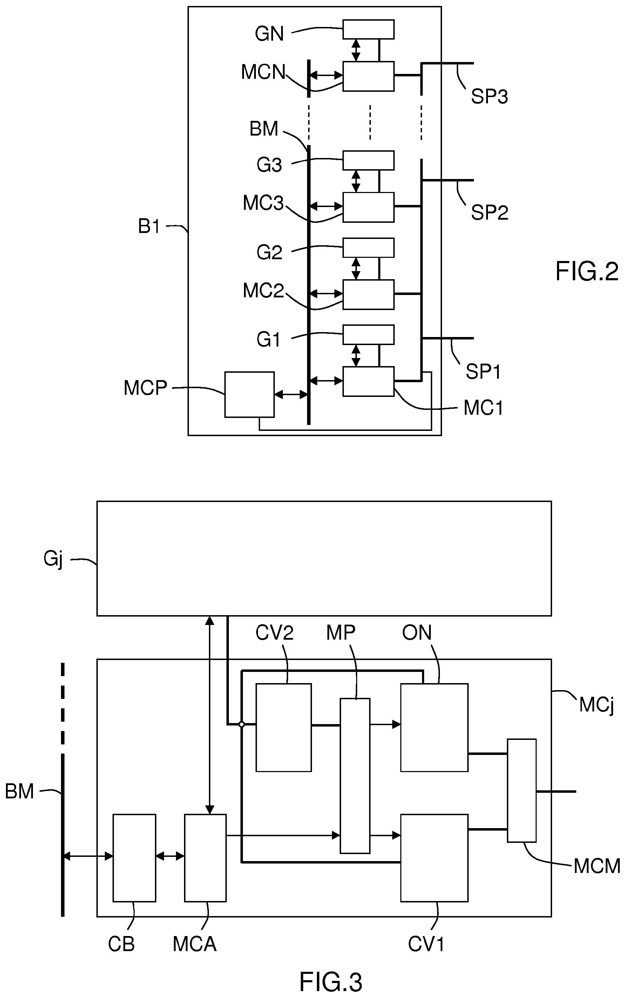

Par exemple, et comme illustré non limitativement sur les figures 1 et 2, dans un véhicule tout électrique la batterie B1 peut comprendre trois sorties principales SP1 à SP3 (k = 1 à 3) propres à délivrer respectivement des tensions de trois types différents. Ces types de tension peuvent être choisis parmi une très basse tension continue, une basse tension continue, et une tension alternative triphasée. Ainsi :
- une première sortie principale SP1 (k = 1) peut être dédiée à l'alimentation d'une batterie de servitude B2 et/ou d'alimenter en très basse tension continue (typiquement sous 12 V) des équipements électriques d'un réseau de bord (non illustré),
- une deuxième sortie principale SP2 (k = 2) peut être dédiée à l'alimentation en alternatif monophasé ou triphasé d'équipement(s) électrique(s), comme par exemple la machine motrice MM, et
- une troisième sortie principale SP3 (k = 3) peut être dédiée à l'alimentation en basse tension continue (typiquement sous 450 V) d'équipement(s) électrique(s) de puissance, comme par exemple un compresseur CP d'un circuit de chauffage/climatisation ou des résistances de chauffage (éventuellement de type CTP) d'un circuit de chauffage.

On notera que la batterie B1, selon l'invention, peut comporter n'importe quel nombre de sorties SPk, dès lors que ce nombre est supérieur ou égal à deux.

Comme cela apparait sur la figure 2, la batterie B1, selon l'invention, comprend également, à l'intérieur de son boîtier, des modules de conversion MCj et des moyens de contrôle principaux MCP.

Chaque module de conversion MCj est installé en sortie d'un groupe Gj de cellule(s) et comprend, comme illustré sur la figure 3, au moins un premier convertisseur CV1, un onduleur ON et des moyens d'interconnexion MCM. Il est important de noter que, dans une variante de réalisation, chaque groupe Gj de cellule(s) pourrait faire partie d'un module de conversion MCj.

Le premier convertisseur CV1 de chaque module de conversion MCj est de type DC-DC (continu/continu) et propre à convertir une première tension continue vc1 fournie par la sortie du groupe Gj associé en une deuxième tension continue vc2 prédéfinie et préférentiellement ajustable. Par exemple, lorsque chaque cellule est de type Li-ion, elle peut délivrer à ses bornes, en fonctionnement normal, une première tension continue vc1 d'environ 3,3 V nominale. Dans ce cas, un groupe Gj de quatre cellules peut délivrer à ses bornes, en fonctionnement normal, une première tension continue vc1 d'environ 13,2 V nominale.

La deuxième tension continue vc2 peut, par exemple, être comprise entre 8 V et 16 V selon la valeur de la première tension continue vc1, et être délivrée sous une puissance de 75 W.

L'onduleur ON de chaque module de conversion MCj est propre à convertir la première tension continue vc1 en une troisième tension alternative vc3 prédéfinie.

La troisième tension alternative vc3 peut, par exemple, être égale à +vc1, -vc1 ou 0 (nulle), et permettre de générer sur la sortie principale SP2 de la batterie B1 un système de tensions alternatives nécessaires, par exemple, au fonctionnement de la machine motrice MM.

Les moyens d'interconnexion MCM de chaque module de conversion MCj sont propres à connecter une sortie du premier convertisseur CV1 associé ou une sortie de l'onduleur ON associé à une sortie d'un autre module de conversion MCj' (j' ≠ j) alimenté par le groupe Gj' ou à l'une des sorties principales SPk en fonction d'une instruction reçue. Les modules de conversion MCj peuvent ainsi être associés en série ou en parallèle afin de délivrer les tensions et les puissances selon les sorties principales SPk.

Les moyens de contrôle principaux MCP sont propres à générer chaque instruction dédiée à chaque module de conversion MCj en fonction d'une définition reçue du type de tension qui est requis pour alimenter au moins l'un des équipements électriques MM, CP, B2 du système V.

Ces moyens de contrôle principaux MCP peuvent, par exemple, être réalisés au moyen d'un processeur de signal numérique (ou DSP (« Digital Signal Processor »)), ou de façon plus générale à l'aide d'un composant programmable (par exemple de type FPGA ou ASIC).

Grâce à l'association à chaque groupe Gj de cellule(s) d'un module de conversion MCj assurant en interne les fonctions de conversion, et au contrôle de chacun de ces modules de conversion MCj par des moyens de contrôle principaux MCP, il est désormais possible de produire en interne dans la batterie B1 n'importe quel(s) type(s) de tension (ou courant) en fonction des besoins, sans qu'il faille prévoir en aval des sorties principales SPk de cette batterie B1 des organes de conversion d'énergie. On comprendra en effet, que cette batterie B1 peut désormais délivrer sur une sortie principale SPk une tension d'un premier type pour au moins un équipement électrique, ou bien sur au moins deux sorties principales SPk et SPk' respectivement des tensions de types différents pour des équipements électriques de types différents. On notera qu'il peut même être éventuellement possible de choisir la valeur de la tension que la batterie B1 délivre sur une sortie principale SPk donnée, grâce à une sélection appropriée du nombre de groupes Gj utilisés pour produire cette tension. On notera également que la batterie B1 pouvant éventuellement délivrer une très basse tension de façon permanente, elle pourrait directement alimenter le réseau de bord du véhicule V, permettant ainsi de s'affranchir de la batterie de servitude B2.

On notera également que la batterie B1 peut éventuellement comprendre une entrée ER de recharge rapide en courant continu ou de recharge lente à partir d'un réseau alternatif (230 V - 50Hz), et/ou une entrée de recharge naturelle en triphasée (230V/400V - 50hz), éventuellement directement via l'une de ses sorties principales SPk.

On notera également, bien que cela n'apparaisse pas sur les figures 1 à 3, que la batterie B1 peut éventuellement comprendre en complément des moyens permettant de la mettre hors circuit lors d'un accident ou d'une intervention de maintenance, et un interrupteur sur sa deuxième sortie principale SP2 pour isoler sa recharge de la machine motrice MM, et des fusibles sur chaque entrée/sortie principale SPk.

Afin de permettre la mise en série et/ou en parallèle des deuxièmes tensions continues vc2, les architectures de ces premiers convertisseurs CV1 (de type DC-DC et isolés) peuvent, par exemple, être de type Push-Pull, ou Forward à redressement synchrone, ou à hacheurs entrelacés isolés, ou encore à convertisseur à résonance. La topologie de ces premiers convertisseurs CV1 doit permettre la réversibilité en puissance.

De préférence, chaque premier convertisseur CV1 est une structure isolée et réversible en puissance. Le rapport cyclique noté D et le rapport de transformation (noté m) de chaque premier convertisseur CV1 permet de définir la deuxième tension continue vc2 isolée galvaniquement en sortie de ce dernier (CV1) selon une loi fonction de D, m et vc1, pour le groupe Gj considéré.

A titre d'exemple, si 15 kW sont au total nécessaires pour alimenter des équipements électriques reliés aux sorties principales SPk relatives à la basse tension continue (par exemple 450 V) consommant 12 kW et à la très basse tension continue (par exemple 12V) consommant 3kW, alors chaque premier convertisseur CV1 est dimensionné pour délivrer une puissance de 75 W, si 201 cellules sont présentes dans la batterie B1 (soit 201 MCj associés à 201 Gj).

Ainsi pour reprendre l'exemple précédent, la production d'une tension continue de 450 V pour une puissance de 12 kW peut être obtenue par l'association de 162 cellules dans la batterie B1. L'agencement de ces 162 cellules peut être réalisé par la mise en parallèle de trois fois 54 modules de conversion MCj dont chaque premier convertisseur CV1 associé délivrerait une tension continue comprise entre 8 V et 9 V.

Toujours en suivant cet exemple, la production d'une tension continue de 12 V pour une puissance de 3 kW, utilisable ici par le réseau de bord, peut être obtenue par la mise en parallèle de 39 cellules dans la batterie B1. On notera que ces 39 cellules peuvent être éventuellement dédiées exclusivement, par configuration initiale, à cette production via les premiers convertisseurs CV1 associés reliés en parallèle et dont la tension de sortie peut également être ajustée pour assurer la charge de la batterie de servitude 11 B2.

Comme illustré non limitativement sur les figures 2 et 3, la batterie B1 peut également comprendre un bus multiplexé BM couplé à ses moyens de contrôle principaux MCP et à chacun de ses modules de conversion MCj. Dans ce cas, chaque module de conversion MCj peut comprendre un contrôleur CB couplé à ce bus multiplexé BM. On comprendra que chaque contrôleur CB assure l'interface entre son module de conversion MCj et les moyens de contrôle principaux MCP via le bus multiplexé BM. Cela permet les échanges de messages entre les modules de conversion MCj et les moyens de contrôle principaux MCP.

A titre d'exemple, le multiplexage peut être de type CAN (« Controller Area Network »).

Egalement comme illustré non limitativement sur la figure 3, chaque module de conversion MCj comprend également des moyens de contrôle auxiliaires MCA propres à générer des signaux de commande propres à placer l'onduleur ON dans un état qui est fonction d'une instruction reçue (par exemple provenant du calculateur de supervision CS). Ces moyens de contrôle auxiliaires MCA peuvent également générer des signaux de commande définissant les niveaux de tension vc2 délivrés par le premier convertisseur CV1 associé.

On notera que les moyens de contrôle auxiliaires MCA associés à chaque groupe Gj peuvent être propres à déterminer la tension aux bornes du groupe Gj associé et une température au sein du groupe Gj associé, et à estimer un état de charge (ou SOC) en cours de ce groupe Gj associé. Ils peuvent alors transmettre au moins chaque état de charge estimé et chaque température déterminée aux moyens de contrôle principaux MCP (ici via le bus multiplexé BM).

Chaque état de charge peut être estimé au moyen d'un algorithme adapté au groupe Gj considéré.

On notera également que les moyens de contrôle principaux MCP peuvent à chaque instant calculer l'état de charge global de leur batterie B1. Les moyens de contrôle principaux MCP peuvent également déterminer l'état de santé (ou SOH (« State Of Health »)) de leur batterie B1, gérer l'équilibrage des groupes Gj de cellule(s), communiquer avec le calculateur de supervision CS du GMP, limiter les appels de courant (courants de décharge et de recharge), et assurer la gestion thermique de leur batterie B1 en régulant le débit d'un liquide caloporteur la traversant et/ou l'entourant partiellement.

Les moyens de contrôle principaux MCP peuvent ainsi optimiser la gestion des cellules de la batterie B1, afin d'optimiser leur durée de vie et l'autonomie du véhicule V. Ils peuvent également, par un pilotage individuel de chaque groupe Gj de cellule(s), réaliser un équilibrage dynamique et une maîtrise de l'état de charge de ces groupes Gj lorsque le véhicule V est en fonctionnement (des groupes pouvant se recharger pendant que d'autres, au même instant, se déchargent ou ne font rien). Cette gestion des groupes Gj peut être définie selon les profils de mission du véhicule V. De plus, le pilotage individuel de chaque groupe Gj de cellule(s) permet de limiter l'utilisation de groupe(s) Gj dont la température est la plus élevée afin de maintenir une température homogène au sein de la batterie B1.

Lorsque chaque module de conversion MCj comprend un contrôleur CB, ses moyens de contrôle auxiliaires MCA sont connectés au bus multiplexé BM afin de recevoir chaque instruction qui les concerne et à partir de laquelle ils vont générer les signaux de commande précités pour l'onduleur ON et le premier convertisseur CV1 associés.

Ces moyens de contrôle auxiliaires MCA peuvent, par exemple, être chacun agencés sous la forme d'un composant numérique programmable (comme par exemple un microcontrôleur ou un DSP).

Chaque onduleur ON est agencé sous la forme d'un pont en H, bien connu de l'homme de l'art. Dans ce cas, comme illustré sur la figure 3, chaque module de conversion MCj comprend des moyens de pilotage (ou « drivers ») MP propres à placer son pont en H ON dans un état qui est fonction d'un signal de commande généré par ses moyens de contrôle auxiliaires MCA.

Comme illustré sur la figure 3, ces moyens de pilotage MP peuvent être également propres à placer le premier convertisseur CV1 associé dans un état qui est fonction d'un signal de commande généré par les moyens de contrôle auxiliaires MCA associés et définissant le niveau de tension vc2 devant être délivré par ce premier convertisseur CV1.

Chaque pont en H peut, par exemple, comprendre quatre composants électroniques tels que des transistors de puissance (éventuellement de type MOSFET) dont les états respectifs peuvent être contrôlés par des commandes en tension. Ces quatre transistors de puissance peuvent être agencés par paires dans deux demi-ponts. Dans ce cas, les moyens de pilotage MP peuvent, par exemple, être agencés sous la forme de deux circuits de type Bootstrap, biens connus de l'homme de l'art. Ces deux circuits de type Bootstrap peuvent être eux-mêmes alimentés par un second convertisseur CV2 de type boost (ou « step-up regulator ») si le nombre de cellules du groupe Gj n'est pas suffisant pour assurer une tension de commande suffisante. On notera que si le groupe Gj est constitué d'un nombre suffisant de cellules en série le second convertisseur CV2 n'est pas nécessaire.

Par exemple, les transistors de puissance peuvent être commandés de manière à placer le pont en H (i.e. l'onduleur ON) dans trois états différents. Ces trois états peuvent être matérialisés par une variable notée uj associée à MCj (ou Gj) et pouvant prendre trois valeurs -1, 0, +1. Par exemple, le premier état associé à la première valeur de uj égale à -1 peut permettre l'inversion de la première tension (d'entrée) vc1, le deuxième état associé à la deuxième valeur de uj égale à 0 peut permettre de définir une tension nulle en sortie de l'onduleur ON, et le troisième état associé à la troisième valeur de uj égale à +1 peut permettre de délivrer en sortie une tension égale à celle vc1 délivrée par le groupe Gj de cellule(s) associé. La tension de sortie vc3 d'un onduleur ON associé au groupe Gj de cellule(s) peut alors s'exprimer par la formule vc3 = vc1*uj.

Ce principe de pilotage basé sur trois états permet de produire en sortie principale de la batterie B1 une tension positive, nulle ou négative et, par exemple, de recharger au moins un groupe Gj de cellule(s) pendant qu'au moins un autre groupe Gj' de cellule(s) se décharge ou ne fait rien. Ainsi, l'invention permet, par exemple, de ne pas utiliser deux groupes Gj et Gj' en plaçant les onduleurs ON associés dans leur deuxième état (uj = 0), et selon le sens du courant de décharger un groupe Gj" en plaçant l'onduleur ON associé dans le troisième état (u3 = +1), ou bien de décharger deux groupes Gj et Gj' en plaçant les onduleurs ON associés dans le troisième état (uj = uj' = +1), et de recharger un groupe Gj" en plaçant l'onduleur ON associé dans le premier état (uj" = -1).

Chaque éventuel second convertisseur CV2, de type DC-DC, d'un module de conversion MCj, peut, en cas de besoin, convertir la première tension continue vc1 en une quatrième tension continue vc4 prédéfinie destinée à alimenter les moyens de pilotage MP associés. Cette quatrième tension continue vc4 peut, par exemple, être égale à 12 V pour une puissance de 1 W.

On notera également que l'utilisation de composants semiconducteurs de puissance haute-fréquence intégrés dans un même module de conversion MCj, éventuellement sur un même substrat, peut, par exemple, être envisagée en technologie GaN ou Si.

L'invention offre plusieurs avantages, parmi lesquels :
- elle permet d'améliorer la sûreté de fonctionnement du fait de la possibilité de déconnecter (ou ne pas utiliser) au moins un groupe de cellule(s) défaillant ou dont la température est trop élevée, tout en gardant le système fonctionnel, voire de déconnecter toutes les cellules de la batterie en cas d'arrêt prolongé du système ou en cas d'incident,
- elle permet de ne pas avoir d'harmoniques dans le courant injecté, et donc une réduction notable des pertes fer,
- elle permet l'utilisation en interne de convertisseurs DC/DC fonctionnant à fort courant et à très basse tension (typiquement inférieure à 20 V), contrairement aux convertisseurs DC/DC externes actuels qui fonctionnent à fort courant et à basse tension (typiquement 400 V),
- elle peut permettre de s'affranchir d'un chargeur dans la batterie, mais dans ce cas cette dernière doit comporter des interrupteurs commutables hors tension (absence de circuit de précharge) pour basculer du mode traction/propulsion au mode recharge,
- elle permet une adaptation facile de la batterie aux différents courants délivrés par le réseau (continu, alternatif, monophasé, triphasé),
- elle permet d'améliorer l'efficacité tout en réduisant le volume global et la masse globale par rapport à une batterie de l'art antérieur associée à un onduleur, des convertisseurs et un chargeur externes et classiques,
- elle permet de réduire les coûts du fait de l'absence d'onduleur, de convertisseurs et de chargeur externes et classiques, voire d'une batterie de servitude (de type 12 V),
- elle peut permettre de faire fonctionner les machines électriques avec des tensions qui sont supérieures aux tensions actuelles d'environ 450 V, sans avoir recours à des classes de composants de puissance qui sont beaucoup plus chères au-delà de 600 V. Par conséquent, cette possibilité d'augmenter la tension de fonctionnement combinée à l'absence d'harmoniques dans le courant injecté peuvent permettre d'utiliser de nouvelles machines électriques offrant une meilleure densité de puissance volumique, une meilleure densité de puissance massique, une meilleure vitesse maximale de fonctionnement et un meilleur rendement.

## Revendications

1. Batterie (B1) comprenant des cellules de stockage d'énergie électrique et au moins deux sorties principales (SPk) propres à délivrer des tensions de types différents et destinées à alimenter différents équipements électriques (MM, CP, B2) d'un système (V), cette batterie comprenant :
i) des modules de conversion (MCj) installés chacun en sortie d'un groupe (Gj) d'au moins une cellule et comprenant chacun un premier convertisseur (CV1) de type DC-DC et propre à convertir une première tension continue fournie par la sortie dudit groupe (Gj) en une deuxième tension continue prédéfinie, chacun des modules de conversion (MCj) comprenant :
- un onduleur (ON) propre à convertir ladite première tension continue en une troisième tension alternative prédéfinie, et des moyens d'interconnexion (MCM) propres à connecter une sortie dudit premier convertisseur (CV1) ou une sortie dudit onduleur (ON) à une sortie d'un autre groupe (Gj') ou à l'une desdites sorties principales (SPk) en fonction d'une instruction reçue,
- des moyens de contrôle auxiliaires (MCA) propres à générer des signaux de commande propres à placer ledit onduleur (ON) associé dans un état qui est fonction d'une instruction reçue,
chaque onduleur (ON) étant agencé sous la forme d'un pont en H, chaque module de conversion (MCj) comprenant des moyens de pilotage (MP) propres à placer son pont en H (ON) dans un état fonction d'un signal de commande généré par lesdits moyens de contrôle auxiliaires (MCA),
ii) des moyens de contrôle principaux (MCP) propres à générer chaque instruction dédiée à chaque module de conversion (MCj) en fonction d'une définition reçue du type de tension requis pour alimenter au moins l'un desdits équipements électriques (MM, CP, B2),
**caractérisée en ce que** chaque module de conversion (MCj) comprend un second convertisseur (CV2) de type DC-DC et propre à convertir ladite première tension continue en une quatrième tension continue prédéfinie destinée à alimenter lesdits moyens de pilotage (MP) associés.

2. Batterie selon la revendication 1, **caractérisée en ce que** lesdits moyens de contrôle auxiliaires (MCA) associés à chaque groupe (Gj) sont propres à déterminer une tension aux bornes du groupe (Gj) associé et une température au sein du groupe (Gj) associé, et à estimer un état de charge en cours du groupe (Gj) associé.

3. Batterie selon la revendication 1 ou 2, **caractérisée en ce qu'**elle comprend un bus multiplexé (BM) couplé auxdits moyens de contrôle principaux (MCP) et à chacun desdits modules de conversion (MCj), et **en ce que** chaque module de conversion (MCj) comprend un contrôleur (CB) couplé audit bus multiplexé (BM).

4. Batterie selon l'une des revendications 1 à 3, **caractérisée en ce qu'**elle comprend trois sorties principales (SPk) propres à délivrer respectivement des tensions de trois types différents.

5. Batterie selon l'une des revendications 1 à 4, **caractérisée en ce que** lesdits types de tension sont choisis parmi une très basse tension continue, typiquement 12 V, une basse tension continue, typiquement 450 V et une tension alternative monophasée ou triphasée.

6. Système (V) comprenant des équipements électriques (MM, CP, B2), **caractérisé en ce qu'**il comprend en outre au moins une batterie (B1) selon l'une des revendications précédentes, propre à alimenter lesdits équipements électriques (MM, CP, B2).

7. Système selon la revendication 6, **caractérisé en ce qu'**il constitue un véhicule de type tout électrique ou hybride.

## Patentansprüche

1. Batterie (B1) mit elektrischen Energiespeicherzellen und mindestens zwei Hauptausgängen (SPk), die unterschiedliche Spannungen liefern und verschiedene elektrische Geräte (MM, CP, B2) eines Systems (V) mit Strom versorgen können. Die Batterie umfasst:
i) Umwandlungsmodule (MCj), die jeweils am Ausgang einer Gruppe (Gj) aus mindestens einer Zelle installiert sind und jeweils einen ersten DC/DC-Wandler (CV1) umfassen, der eine vom Ausgang der Gruppe (Gj) gelieferte erste Gleichspannung in eine zweite vordefinierte Gleichspannung umwandelt. Jedes der Umwandlungsmodule (MCj) umfasst:
- einen Wechselrichter (ON), der die erste Gleichspannung in eine dritte vordefinierte Wechselspannung umwandelt, und Verbindungsmittel (MCM), die einen Ausgang des ersten Wandlers (CV1) oder einen Ausgang des Wechselrichters (ON) gemäß einer empfangenen Anweisung mit einem Ausgang einer anderen Gruppe (Gj') oder einem der Hauptausgänge (SPk) verbinden können,
- Hilfssteuermittel (MCA), die Steuersignale erzeugen, um den zugehörigen Wechselrichter zu aktivieren. (ON) in einen Zustand, der von einer empfangenen Anweisung abhängt, wobei jeder Wechselrichter (ON) in Form einer H-Brücke angeordnet ist und jedes Umwandlungsmodul (MCj) Steuermittel (MP) umfasst, die seine H-Brücke (ON) in einen Zustand versetzen können, der von einem von den Hilfssteuermitteln (MCA) erzeugten Steuersignal abhängig ist.
ii) Hauptsteuermittel (MCP), die jeden für jedes Umwandlungsmodul (MCj) bestimmten Befehl gemäß einer empfangenen Definition der zur Versorgung mindestens eines der elektrischen Geräte (MM, CP, B2) erforderlichen Spannungsart erzeugen können. **dadurch gekennzeichnet, dass** jedes Umwandlungsmodul (MCj) einen zweiten Wandler (CV2) vom Typ DC/DC umfasst, der die erste Gleichspannung in eine vierte vordefinierte Gleichspannung zur Versorgung der zugehörigen Steuermittel (MP) umwandeln kann.

2. Batterie nach Anspruch 1, **dadurch gekennzeichnet, dass** die jeder Gruppe (Gj) zugeordneten Hilfssteuermittel (MCA) die Spannung an den Anschlüssen der zugehörigen Gruppe (Gj) und die Temperatur innerhalb der zugehörigen Gruppe (Gj) bestimmen und den aktuellen Ladezustand der zugehörigen Gruppe (Gj) schätzen können.

3. Batterie nach Anspruch 1 oder 2, **dadurch gekennzeichnet, dass** sie einen Multiplex-Bus (BM) umfasst, der mit den Hauptsteuermitteln (MCP) und jedem der Konvertierungsmodule (MCj) verbunden ist, und dass jedes Konvertierungsmodul (MCj) einen Controller (CB) umfasst, der mit dem Multiplex-Bus (BM) verbunden ist.

4. Batterie nach einem der Ansprüche 1 bis 3, **dadurch gekennzeichnet, dass** sie drei Hauptausgänge (SPk) umfasst, die jeweils drei verschiedene Spannungsarten liefern können.

5. Batterie nach einem der Ansprüche 1 bis 4, **dadurch gekennzeichnet, dass** die Spannungsarten aus einer sehr niedrigen Gleichspannung, typischerweise 12 V, einer niedrigen Gleichspannung, typischerweise 450 V, und einer einphasigen oder dreiphasigen Wechselspannung ausgewählt sind.

6. System (V) mit elektrischen Geräten (MM, CP, B2), **dadurch gekennzeichnet, dass** es zusätzlich mindestens eine Batterie (B1) nach einem der vorhergehenden Ansprüche umfasst, die die elektrischen Geräte (MM, CP, B2) mit Strom versorgen kann.

7. System nach Anspruch 6, **dadurch gekennzeichnet, dass** es ein vollelektrisches oder Hybridfahrzeug darstellt.

## Claims

1. Battery (B1) comprising electrical energy storage cells and at least two main outputs (SPk) capable of delivering voltages of different types and intended to power different electrical equipment (MM, CP, B2) of a system (V), this battery comprising:
i) conversion modules (MCj) each installed at the output of a group (Gj) of at least one cell and each comprising a first converter (CV1) of the DC-DC type and capable of converting a first direct voltage supplied by the output of said group (Gj) into a second predefined direct voltage, each of the conversion modules (MCj) comprising:
- an inverter (ON) capable of converting said first direct voltage into a third predefined alternating voltage, and interconnection means (MCM) capable of connecting an output of said first converter (CV1) or an output of said inverter (ON) to an output of another group (Gj') or to one of said main outputs (SPk) according to a received instruction,
- means of auxiliary control means (MCA) capable of generating control signals capable of placing said associated inverter (ON) in a state which is a function of a received instruction, each inverter (ON) being arranged in the form of an H-bridge, each conversion module (MCj) comprising control means (MP) capable of placing its H-bridge (ON) in a state which is a function of a control signal generated by said auxiliary control means (MCA),
ii) main control means (MCP) capable of generating each instruction dedicated to each conversion module (MCj) according to a received definition of the type of voltage required to power at least one of said electrical equipment (MM, CP, B2), **characterized in that** each conversion module (MCj) comprises a second converter (CV2) of the DC-DC type and capable of converting said first DC voltage into a fourth predefined DC voltage intended to power said associated control means (MP).

2. Battery according to claim 1, **characterized in that** said auxiliary control means (MCA) associated with each group (Gj) are capable of determining a voltage at the terminals of the associated group (Gj) and a temperature within the associated group (Gj), and of estimating a current state of charge of the associated group (Gj).

3. Battery according to claim 1 or 2, **characterized in that** it comprises a multiplexed bus (BM) coupled to said main control means (MCP) and to each of said conversion modules (MCj), and **in that** each conversion module (MCj) comprises a controller (CB) coupled to said multiplexed bus (BM).

4. Battery according to one of claims 1 to 3, **characterized in that** it comprises three main outputs (SPk) capable of respectively delivering voltages of three different types.

5. Battery according to one of claims 1 to 4, **characterized in that** said voltage types are chosen from a very low direct voltage, typically 12 V, a low direct voltage, typically 450 V and a single-phase or three-phase alternating voltage.

6. System (V) comprising electrical equipment (MM, CP, B2), **characterized in that** it further comprises at least one battery (B1) according to one of the preceding claims, capable of powering said electrical equipment (MM, CP, B2).

7. System according to claim 6, **characterized in that** it constitutes a vehicle of the all-electric or hybrid type.
